# EUROPÄISCHE PATENTSCHRIFT

(11) **EP 3 212 445 B1**
(45) Veröffentlichungstag und Bekanntmachung des Hinweises auf die Patenterteilung: **09.06.2021**
(21) Anmeldenummer: 15784599.1
(22) Anmeldetag: 13.10.2015
(51) Int. Cl.: B60J 1/20

(54) **BESCHATTUNGSVORRICHTUNG FÜR EINE SCHEIBE EINES KRAFTFAHRZEUGS**
SHADE DEVICE FOR A WINDSCREEN OF A MOTOR VEHICLE
DISPOSITIF D'OMBRAGE POUR VITRE DE VÉHICULE AUTOMOBILE

(30) Priorität: 29.10.2014 DE 102014222128
(43) Veröffentlichungstag der Anmeldung: 06.09.2017
(73) Patentinhaber: BOS GmbH & Co. KG, 73760 Ostfildern (DE)
(72) Erfinder: SAUER, Roman, 72663 Grossbettlingen (DE); KOLLER, Sandor, H-9028 Györ (HU)
(74) Vertreter: Patentanwälte Ruff, Wilhelm, Beier, Dauster & Partner mbB
(86) Internationale Anmeldenummer: PCT/EP2015/073690
(87) Internationale Veröffentlichungsnummer: WO 2016/066421

(56) Entgegenhaltungen:
- EP-A1- 1 418 073
- EP-A2- 2 614 974
- DE-A1-102012 019 903

## Beschreibung

Die Erfindung betrifft eine Beschattungsvorrichtung für eine Scheibe eines Kraftfahrzeugs mit einem Beschattungsgebilde, das mithilfe von Antriebsmitteln zwischen einer abgesenkten Ruhestellung und einer ausgefahrenen Beschattungsstellung in fahrzeugfesten seitlichen Führungsschienen verlagerbar ist, wobei das Beschattungsgebilde in der Ruhestellung durch einen Durchtritt hindurch in einen fahrzeugfesten Schacht abgesenkt ist, wobei der Durchtritt durch einen zwischen einer Öffnungs- und einer Schließstellung beweglichen Deckel verschließbar ist, und wobei Steuermittel zum Öffnen und Schließen des Deckels vorgesehen sind, die an eine Verlagerungsbewegung des Beschattungsgebildes gekoppelt sind.

Eine derartige Beschattungsvorrichtung ist allgemein bekannt. Die bekannte Beschattungsvorrichtung ist für eine Seitenscheibe eines Personenkraftwagens vorgesehen. Zur Abschattung der Seitenscheibe ist ein flexibles Beschattungsgebilde vorgesehen, das auf einer Wickelwelle auf- und abwickelbar gelagert ist. Die Wickelwelle ist unterhalb einer Fahrzeugseitenbrüstung hinter einer Fahrzeuginnenverkleidung fahrzeugseitig drehbar gelagert. Das Beschattungsgebilde weist an seinem in Auszugrichtung vorderen Stirnendbereich ein formstabiles Auszugprofil auf, das in fahrzeugfesten seitlichen Führungsschienen zwischen einer durch die Innenraumverkleidung verdeckten Ruhestellung und einer zu einem oberen Rand der Seitenscheibe verfahrenen Beschattungsstellung verlagerbar ist. Das Beschattungsgebilde und das Auszugprofil sind durch einen Durchtritt mit der Fahrzeuginnenraumverkleidung hindurchgeführt, der in der abgesenkten Ruhestellung durch einen Deckel verschlossen ist. Der Deckel ist zwischen einer Öffnungs- und einer Schließstellung schwenkbeweglich, wobei die Schwenkbeweglichkeit des Deckels gesteuert wird durch Steuermittel, die den Deckel in Abhängigkeit von der Verfahrposition des Auszugprofils des Beschattungsgebildes öffnen oder schließen.

Eine Beschattungsvorrichtung gemäß dem Obergriff des Anspruchs 1 ist aus dem Dokument EP 2614974 A2 bekannt.

Aufgabe der Erfindung ist es, eine Beschattungsvorrichtung der eingangs genannten Art zu schaffen, die eine sichere und klapperfreie Überführung und Sicherung des Deckels bezüglich seiner Öffnungs- und Schließstellung ermöglicht.

Diese Aufgabe wird dadurch gelöst, dass die Steuermittel einen am Deckel angreifenden Steuerstößel umfassen, der in entgegengesetzten Zug- und Druckrichtungen an dem Deckel angelenkt ist, wobei der Steuerstößel mit dem Deckel über ein federelastisches Spannmittel in Wirkverbindung ist, das in einer Bewegungsrichtung federelastisch gespannt und in einer entgegengesetzten Bewegungsrichtung wirkungslos entspannt ist. Der Steuerstößel hat erfindungsgemäß eine Doppelfunktion, indem er zum einen nach Art einer Stößelstange eine Kraftübertragung auf den Deckel bewirkt, um diesen in seine Öffnungsstellung oder seine Schließstellung zu verschwenken. Zum anderen ist dem Steuerstößel ein federelastisches Spannmittel zugeordnet, das in einer Bewegungsrichtung des Steuerstößels noch eine zusätzliche elastische Spannkraft auf den Deckel ausübt. In vorteilhafter Weise ist die elastische Spannkraft in Schließrichtung bzw. in der Schließstellung des Deckels vorgesehen, um diesen sicher und klapperfrei in seine Schließstellung zu spannen und so in dieser Schließstellung zu sichern. Als federelastisches Spannmittel kann ein Elastomerstrang oder auch eine mechanische Federanordnung wie insbesondere eine Schraubenzugfeder oder eine Schraubendruckfeder vorgesehen sein. In vorteilhafter Weise tritt das federelastische Spannmittel bei einer Zugbelastung des Steuerstößels in Aktion. Bei einer Variante der Erfindung kann das federelastische Spannmittel auch bei einer Druckbelastung des Steuerstößels wirksam sein. In vorteilhafter Weise ist lediglich ein einzelner Steuerstößel mit einem zugeordneten federelastischen Spannmittel vorgesehen, die an dem Deckel angreifen. Ein entsprechender Angriffspunkt kann im Bereich einer Seitenflanke des Deckels oder im Bereich einer Deckelmitte vorgesehen sein. Falls der Deckel aufgrund eines relativ langen, aber schmalen Durchtritts im Brüstungsbereich einer entsprechenden Innenraumverkleidung eine relativ große Länge, jedoch eine lediglich geringe Breite aufweist, ist der Deckel vorzugsweise in seiner Längsrichtung derart versteift, dass sich bei einem Angriff des Steuerstößels in Verbindung mit dem federelastischen Spannmittel im Bereich einer Seitenflanke des Deckels keine nennenswerte Torsion des Deckels ergibt, so dass die auf den Deckel wirkende Spannkraft, die im Bereich der einen Seitenflanke eingeleitet wird, den Deckel über seine gesamte Länge in die Endstellung spannt. Die erfindungsgemäße Lösung eignet sich in besonders vorteilhafter Weise für den Einsatz bei Seitenscheiben von Personenkraftwagen. Die erfindungsgemäße Lösung kann aber auch im Heckscheibenbereich von Personenkraftwagen oder an Fahrzeugscheiben von anderen Kraftfahrzeugen eingesetzt werden, die auf der Straße, in unwegsamem Gelände oder auf Schienen unterwegs sind. Die erfindungsgemäße Lösung ist demzufolge nicht nur für Personenkraftwagen, sondern auch für Nutz- und Lastkraftfahrzeuge sowie für Schienenfahrzeuge einsetzbar.

In Ausgestaltung der Erfindung sind der Steuerstößel und das Spannmittel durch eine Schraubenzugfeder gebildet, die wenigstens eine endseitige, in Zugrichtung als Spannmittel dienende Federwindung aufweist, wobei alle Federwindungen der Schraubenzugfeder in Druckrichtung auf Block zusammengepresst sind. Dies ist eine besonders einfach und kostengünstig herstellbare Ausgestaltung der Erfindung. Sobald die Federwindungen der Schraubenzugfeder auf Block zusammengepresst sind, wirkt die Schraubenzugfeder in Druckrichtung als Stößelstange. In Zugrichtung ist vorzugsweise der Großteil der Federwindungen ebenfalls federelastisch blockiert, um die Wirkung als Stößelstange in Zugrichtung nicht zu beeinträchtigen. Eine oder mehrere, wenige endseitige Federwindungen hingegen sind federelastisch freiliegend gehalten, um in Zugrichtung die gewünschte federelastische Spannwirkung entfalten zu können. Die Formulierung, dass die Federwindungen auf Block zusammengepresst sind, bedeutet nicht zwangsläufig, dass die Federwindungen auf Block aneinanderliegen. Die Formulierung bedeutet lediglich, dass die Federwindungen in ihrer federelastischen Wirkung blockiert sind. In dieser Funktion wirkt die Schraubenzugfeder vielmehr als zumindest im Wesentlichen starre Stößelstange.

In weiterer Ausgestaltung der Erfindung weist ein Federdraht der Schraubenzugfeder eine Federsteifigkeit auf, die ausreichend groß ist, um eine starre Stößelfunktion in Druckrichtung auf den Deckel auszuüben. Dies gilt insbesondere für die freien Enden der Schraubenzugfeder, die am Deckel bzw. an einem Führungselement angelenkt sind. Die freien Enden müssen derart steif ausgeführt sein, dass bei entsprechenden Druck- oder Zugbelastungen, die auf die Schraubenzugfeder wirken, kein Biegen oder Ausknicken der freien Enden auftritt, die nicht als Federwindungen gewickelt sind.

In weiterer Ausgestaltung der Erfindung ist die Schraubenzugfeder durch einen Stützkörper außen- oder innenseitig flankiert, der die Federwindungen kraftschlüssig klemmt. Der Stützkörper bewirkt die federelastische Blockierung der Federwindungen und ist zudem so ausgeführt, dass er in Zugrichtung eine oder mehrere endseitige Federwindungen freigibt, um die gewünschte elastische Spannkraft in Zugrichtung ergänzend aufbringen zu können. Der Stützkörper kann außenseitig nach Art einer die Schraubenzugfeder ummantelnden Hülse oder innenseitig als auf den Innendurchmesser der Schraubenzugfeder abgestimmtes Voll- oder Hohlprofil ausgeführt sein.

In weiterer Ausgestaltung der Erfindung ist der Stützkörper als innenseitig vorgesehener zylindrischer Füllkörper gestaltet. Der Füllkörper ist formstabil ausgeführt und vorzugsweise einteilig aus Kunststoff hergestellt.

In weiterer Ausgestaltung der Erfindung greift der Steuerstößel an einer Seite des Deckels an, und an einer gegenüberliegenden Seite des Deckels greift ein elastisch spannbares Zugmittel an, das nur in Zugrichtung auf den Deckel wirkt. Das elastisch spannbare Zugmittel kann als Elastomerstrang oder als Schraubenzugfeder oder als ähnlich gestaltete, mechanische Federanordnung ausgeführt sein und übt auf den Deckel eine Zugbelastung in Schließrichtung aus. Das elastisch spannbare Zugmittel unterstützt die Schließfunktion des Steuerstößels in Schließrichtung, um das Risiko von auf den Deckel wirkenden Torsionen weiter zu reduzieren. In Druckrichtung des Steuerstößels, um den Deckel in die Öffnungsstellung zu überführen, wirkt das elastisch spannbare Zugmittel, das sich unter permanenter Vorspannung befindet, geringfügig entgegen, um ein spielfreies Aufschwenken des Deckels zu ermöglichen, und um entsprechende Lagertoleranzen des Deckels zu dämpfen.

In weiterer Ausgestaltung der Erfindung ist der Steuerstößel gegenüberliegend zu dem Angriffspunkt an dem Deckel an einem längs einer seitlichen Führungsschiene verfahrbaren Führungselement angelenkt, das über einen begrenzten Verfahrweg mit dem Beschattungsgebilde in Wirkverbindung ist.

In weiterer Ausgestaltung der Erfindung ragt das Führungselement in einen Bewegungsweg eines Antriebselements eines formstabilen Auszugprofils des Beschattungsgebildes hinein. Eine Bewegung des Auszugprofils in der Nähe seiner eingefahrenen Ruhestellung bewirkt daher eine zwangsläufige Ansteuerung des Führungselements, wodurch mittels des Steuerstößels ein - je nach Bewegungsrichtung des Auszugprofils - gewünschtes Öffnen oder Schließen des Deckels bewirkt wird.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt eine Ausführungsform einer erfindungsgemäßen Beschattungsvorrichtung, die zur Beschattung einer Seitenscheibe eines Personenkraftwagens vorgesehen ist,
- Fig. 2: in vergrößerter Darstellung einen Ausschnitt der Beschattungsvorrichtung nach Fig. 1 in einer Schließstellung eines Deckels, der einen Aufnahmeschaft für ein Beschattungsgebilde verschließt oder freigibt,
- Fig. 3: die Darstellung nach Fig. 2 zu Beginn eines Ausfahrvorgangs des Beschattungsgebildes,
- Fig. 4: die Darstellung nach den Fig. 2 und 3 in einer Zwischenstellung des Ausfahrvorgangs des Beschattungsgebildes, in der der Deckel teilweise geöffnet ist,
- Fig. 5: die Darstellung nach den Fig. 2 bis 4 in einer Öffnungsstellung des Deckels,
- Fig. 6a bis 6d: in einer schematischen Seitenansicht die verschiedenen Öffnungsstellungen des Deckels analog den Fig. 2 bis 5 und
- Fig. 7a und 7b: schematisch einen Ausschnitt der Beschattungsvorrichtung nach Fig. 1 im Bereich eines Steuerstößels, der den Deckel in der geöffneten Endstellung (Fig. 7a) und in der geschlossenen Endstellung (Fig. 7b) stützt.

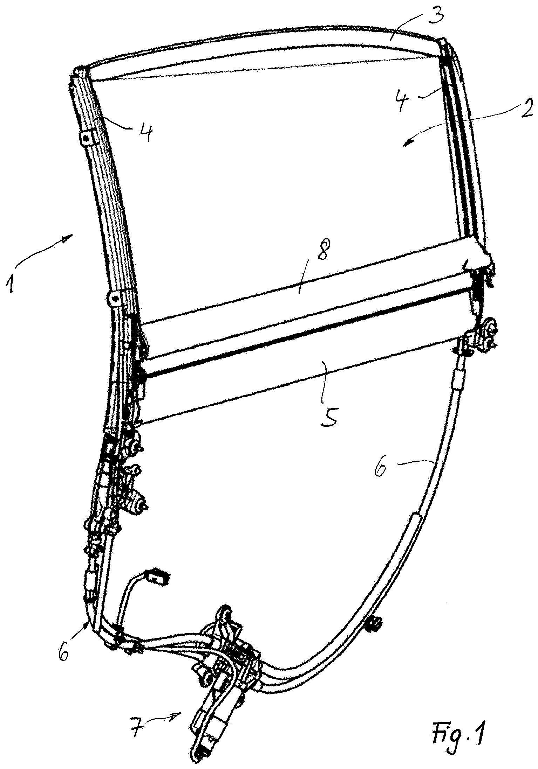

Eine Beschattungsvorrichtung 1 nach Fig. 1 ist für eine Seitenscheibe einer Fondseitentür eines Personenkraftwagens vorgesehen. Die Beschattungsvorrichtung 1 weist ein Beschattungsgebilde 2 auf, das als flexibles Flächengebilde in Form einer textilen Web- oder Maschenware oder in Form einer ein- oder mehrlagigen Folienbahn gestaltet ist. Das Beschattungsgebilde 2 weist eine geringe Lichtdurchlässigkeit auf, um in der Beschattungsstellung eine Abdunkelung der entsprechenden Seitenscheibe zu bewirken. Das Beschattungsgebilde 2 ist in nicht näher dargestellter Weise auf einer drehbaren Wickelwelle auf- und abwickelbar gehalten. Das Beschattungsgebilde 2 weist an seinem in Abwickelrichtung vorderen Stirnendbereich ein formstabiles Auszugprofil 3 auf, das an seinen gegenüberliegenden Stirnendbereichen mithilfe von Antriebs- und Gleitelementen in seitlichen Führungsschienen 4 in Hochrichtung der Seitenscheibe längsverlagerbar geführt ist. Die seitlichen Führungsschienen 4 sind türseitig und damit fahrzeugseitig befestigt und flankieren die zu beschattende Seitenscheibe auf gegenüberliegenden Seiten.

Die Wickelwelle, auf der das Beschattungsgebilde 2 auf- und abwickelbar gehalten ist, ist in einem türfesten und damit fahrzeugfesten Schacht 5 drehbar gelagert, der zwischen einer Karosseriebeplankung der Seitentür und einer Türinnenverkleidung angeordnet ist, wobei die Seitentür einschließlich ihrer Karosseriebeplankung und ihrer Türinnenverkleidung aus Übersichtlichkeitsgründen nicht dargestellt sind. Türfest angeordnet ist zudem ein Antriebssystem 6, 7, um das Auszugprofil 3 gemeinsam mit dem Beschattungsgebilde 2 zwischen der Beschattungsstellung gemäß Fig. 1 und einer in den Schacht 5 eingefahrenen und auf die Wickelwelle aufgewickelten Ruhestellung zu verlagern. Das Antriebssystem 6, 7 ist in der Seitentür unterhalb einer Türseitenbrüstung zwischen einer Karosseriestruktur der Seitentür und der Türinnenverkleidung integriert. Das Antriebssystem 7 weist eine elektrische Antriebseinheit auf, die über strangartige Antriebsübertragungsmittel 6, insbesondere in Form von Flexwellen, eine Verlagerungsbewegung des Auszugprofils 3 bewirkt. Die Antriebsübertragungsmittel 6 erstrecken sich durch die seitlichen Führungsschienen 4 hindurch bis hin zu entsprechenden Antriebselementen des Auszugprofils 3, die in den seitlichen Führungsschienen 4 geführt sind. Das Antriebssystem 6, 7 ist derart ausgeführt, dass die gegenüberliegenden Antriebselemente des Auszugprofils 3 synchron zueinander längs der Führungsschienen 4 verlagert werden, um eine gewünschte Parallelverlagerung des Auszugprofils 3 in Hochrichtung zu bewirken.

Im Bereich der Türseitenbrüstung ist in nicht näher dargestellter Weise ein Durchtritt vorgesehen, der oberhalb des Schachts 5 angeordnet ist, und durch den das Beschattungsgebilde 2 und das Auszugprofil 3 bei einer Rückführbewegung aus der Beschattungsstellung in die Ruhestellung bzw. bei einer Ausfahrbewegung aus der Ruhestellung in die Beschattungsstellung hindurchgeführt werden. Der Durchtritt erstreckt sich in seiner Länge über zumindest nahezu die gesamte Breite der Seitenscheibe - in Fahrzeuglängsrichtung gesehen.

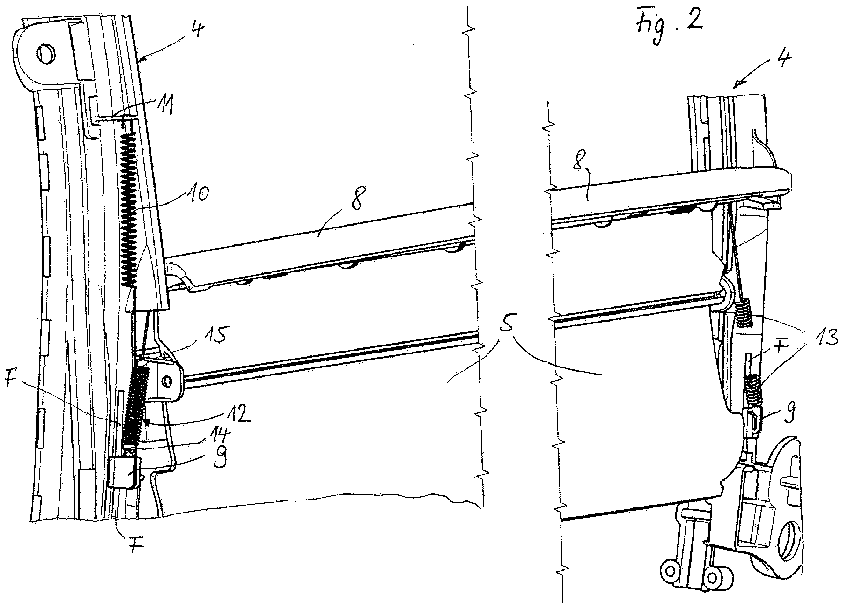

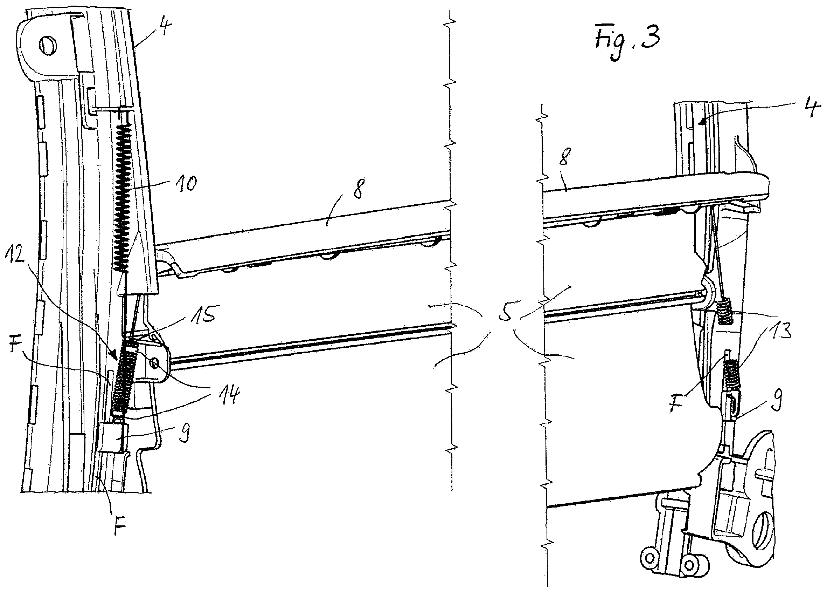

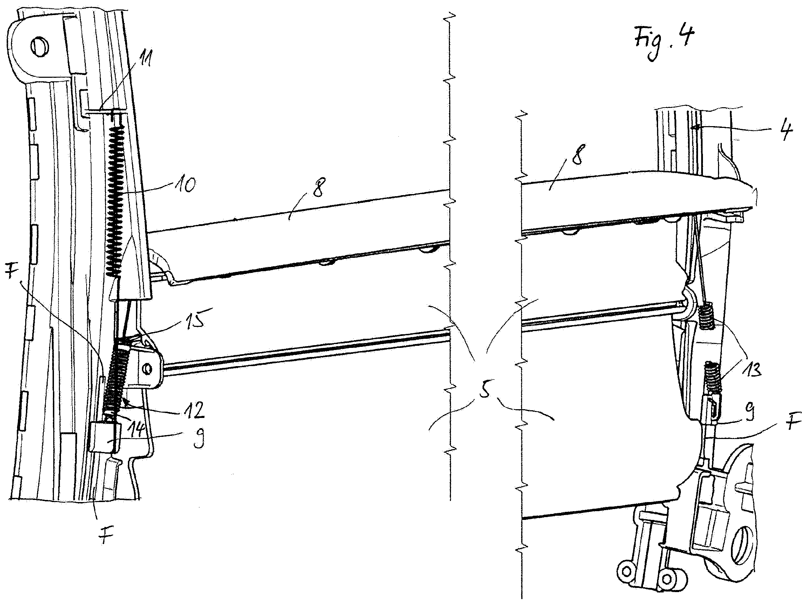

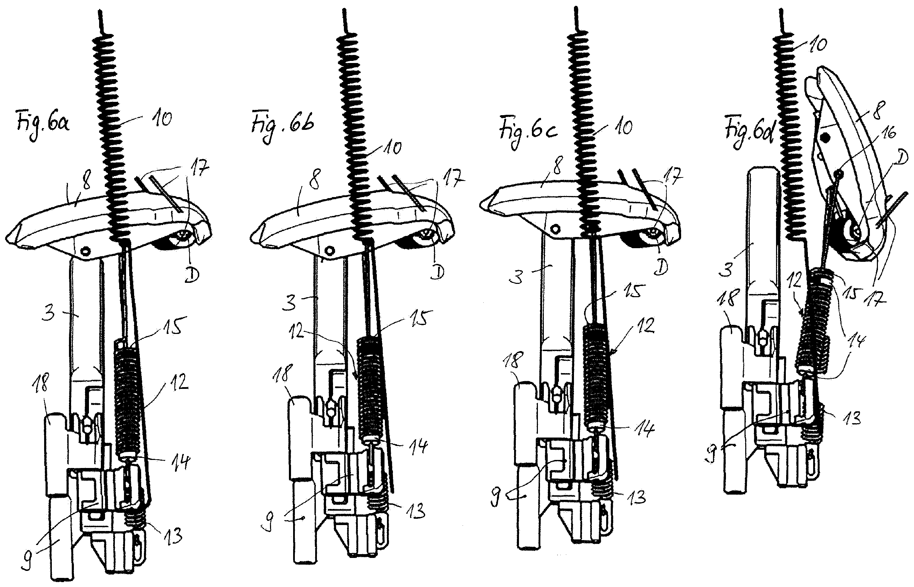

Um den Durchtritt in der Türseitenbrüstung zu verschließen, ist ein als Klappe gestalteter Deckel 8 vorgesehen, der um eine im Wesentlichen in Fahrzeuglängsrichtung erstreckte Schwenkachse D (Fig. 6a bis 6d) an türfesten Strukturteilen wie insbesondere im Bereich der seitlichen Führungsschienen 4 schwenkbeweglich gelagert ist. Anhand der Fig. 2 bis 7b wird nachfolgend die Schwenkverlagerung des Deckels 8 zwischen seiner Schließstellung und seiner Öffnungsstellung detailliert beschrieben.

Der Deckel 8 ist in nicht näher dargestellter Weise in Fahrzeuglängsrichtung, d.h. längs des Durchtritts, versteift. Im Bereich der Schwenklagerung des Deckels 8 sind koaxial zur Schwenkachse D an gegenüberliegenden Seiten des Deckels 8 Schenkelfedern 17 vorgesehen, die anhand der Fig. 6a bis 6d schematisch dargestellt sind und die auf den Deckel 8 ein permanentes Drehmoment in Öffnungsrichtung ausüben.

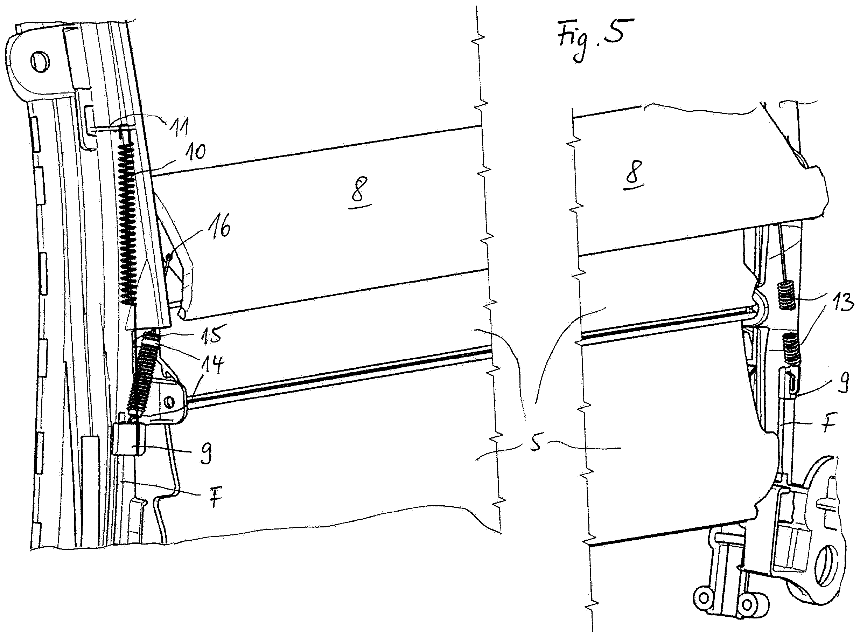

Zur Verschwenkung des Deckels 8 zwischen seiner Öffnungsstellung (Fig. 5 und 6d) und seiner Schließstellung (Fig. 2 und 6a) ist auf einer Seite des Deckels 8 - in der Darstellung gemäß den Fig. 2 bis 5 in einem linken Seitenflankenbereich - ein Steuerstößel 12 vorgesehen, der mit seinem oberen Stirnendbereich an einem Anlenkpunkt 16 in radialem Abstand zu der Schwenkachse D am Deckel 8 angreift.

Die Schwenklagerung des Deckels 8 ist beim dargestellten Ausführungsbeispiel an einer Wandung des Schachts 5 vorgesehen. Der Schacht 5 ist - wie zuvor bereits ausgeführt wurde - türfest und demzufolge fahrzeugfest im Bereich einer Türstruktur, verdeckt durch die Türinnenverkleidung, angeordnet.

Ein gegenüberliegender Stirnendbereich des Steuerstößels 12 ist an einem Führungselement 9 gehalten, das in einer seitlichen Führung, vorliegend in einem Führungsschlitz F im Bereich der linken seitlichen Führungsschiene 4 in Hochrichtung gleitbeweglich gelagert ist. Der Führungsschlitz F weist eine längs der seitlichen Führungsschiene 4 begrenzte Länge auf, die ausreicht, um über eine entsprechende Gleitbewegung des Führungselements 9 auf den Steuerstößel 12 eine entsprechende Öffnungs- und Schließbewegung des Deckels 8 zu übertragen. Das Führungselement 9 umfasst einen Gleitstein, der in einer nicht näher dargestellten Führungsnut der seitlichen Führungsschiene 4 hinter dem Führungsschlitz F längsverschiebbar geführt ist. Das so gestaltete Führungselement 9 ragt in einen Bewegungsweg eines Antriebselements 18 hinein, das im Bereich der linken seitlichen Führungsschiene 4 dazu dient, das Auszugprofil 3 längs der Führungsschiene 4 zwischen seiner Ruhestellung und seiner Beschattungsstellung zu verlagern. An dem Antriebselement 18 greift die in der Darstellung nach Fig. 1 linke Flexwelle 6 an, die durch einen entsprechenden Führungskanal in der linken seitlichen Führungsschiene 4 geführt ist.

Auf das Führungselement 9 wirkt zudem eine permanente Zugkraft einer vorgespannten Zugfeder 10, die mit ihrem oberen Stirnendbereich an einer türfesten Halterung 11 stationär, d.h. fahrzeugfest, eingehängt ist. Die Zugfeder 10 greift mit ihrem unteren Stirnendbereich an dem Führungselement 9 an und übt auf das Führungselement 9 eine permanente Zugkraft in Richtung eines oberen Stirnendes des Führungsschlitzes F aus. Das Führungselement 9 ist demzufolge zugkraftbeaufschlagt zwischen einem unteren Stirnende und dem oberen Stirnende des Führungsschlitzes F verschiebbar.

An einem zu dem Steuerstößel 12 gegenüberliegenden Seitenflankenbereich des Deckels 8 greift eine einfache Schraubenzugfeder 13 an, die ebenfalls an einem spiegelsymmetrisch zu dem linken Führungselement 9 ausgeführten Führungselement 9 gehalten ist, das in einem analog gestalteten rechten Führungsschlitz F verlagerbar ist. Auch das anhand der Fig. 2 bis 5 rechte Führungselement 9 wird in analoger Weise durch das synchron verlagerte rechte Antriebselement 18 der rechten Flexwelle 6 in der rechten seitlichen Führungsschiene 4 beaufschlagt, sobald das Auszugprofil 3 in die Nähe seiner Ruhestellung gelangt ist.

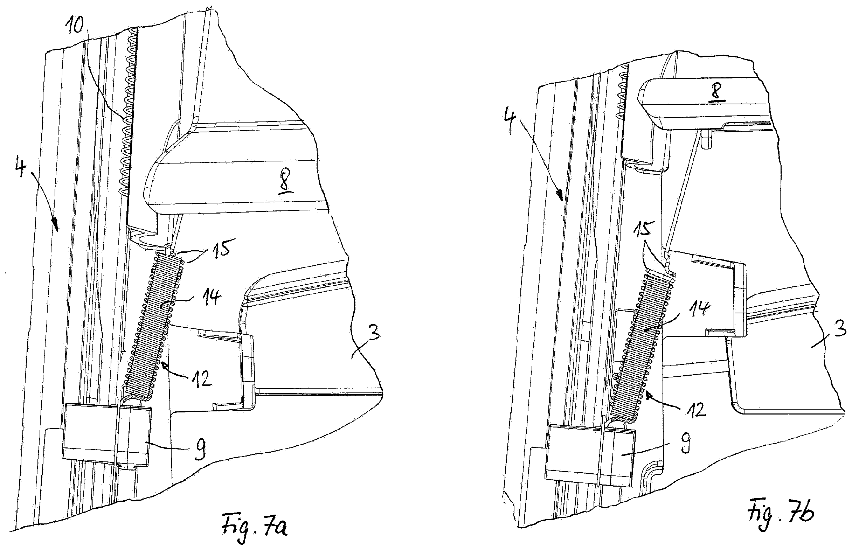

Der Steuerstößel 12 weist eine Schraubenzugfeder auf, deren Federwindungen einen zylindrischen Stützkörper 14 kraftschlüssig ummanteln (siehe Fig. 7a und 7b). Ein Federdraht der Schraubenzugfeder bildet an seinen gegenüberliegenden Stirnenden Verbindungsabschnitte, um die Schraubenzugfeder unten mit dem Führungselement 9 und oben mit dem Anlenkpunkt 16 des Deckels 8 zu verbinden. Die an den oberen Verbindungsabschnitt der Schraubenzugfeder anschließenden ein bis zwei Federwindungen 15 sind mit ihrem Innendurchmesser geringfügig größer gestaltet als die nach unten anschließenden Federwindungen, die kraftschlüssig auf dem Mantel des Stützkörpers 14 gehalten sind. Diese ein bis zwei Federwindungen 15 ermöglichen daher in Zugrichtung des Steuerstößels 12 nach unten eine federelastische Spannwirkung, die auf den Deckel 8 wirkt. Die elastische Spannwirkung durch die ein bis zwei Federwindungen 15 des Steuerstößels 12 tritt auf, wenn der Steuerstößel 12 über das Führungselement 9 in eine untere Endstellung bewegt wird, bei der der Deckel 8 in Richtung der Schließstellung mitgenommen wird. In entgegengesetzter Druckrichtung nach oben werden die ein bis zwei Federwindungen 15 auf Block gegen die anschließenden Federwindungen der Schraubenzugfeder gepresst, die kraftschlüssig auf dem Mantel des Stützkörpers 14 gehalten sind. In dieser Druckrichtung nach oben wirkt der Steuerstößel 12 daher ausschließlich als Stößelstange. Die Federwindungen 15 sind in dieser Druckrichtung außer Kraft gesetzt. Die Verbindungsabschnitte der Schraubenzugfeder, die die Anlenkung des Steuerstößels 12 am Deckel 8 einerseits und am Führungselement 9 andererseits bewirken, sind derart steif ausgeführt, dass sich bei entsprechenden Zug- oder Druckbelastungen keine Durchbiegungen oder Ausknickungen dieser Verbindungsabschnitte ergeben. Anhand der Fig. 2 bis 5 und 6a bis 6d ist die Funktion der Steuerung des Deckels 8 zwischen der Öffnungs- und der Schließstellung gut erkennbar:

Wenn das Auszugprofil 3 sich in seiner Beschattungsstellung gemäß Fig. 1 befindet, wird der Deckel 8 permanent in seiner Öffnungsstellung gehalten. Dies erfolgt durch die Zugfeder 10, die das Führungselement 9 in die obere Endstellung des Führungsschlitzes F zieht. Über den Steuerstößel 12 wird der Deckel 8 in die Öffnungsstellung überführt und in dieser Öffnungsstellung stabil gestützt.

Sobald das Auszugprofil 3 aus der Beschattungsstellung in Richtung der Ruhestellung nach unten bewegt wird, kommen die gegenüberliegenden Antriebselemente 18 des Auszugprofils 3 mit den in ihrer oberen Endstellung befindlichen Führungselementen 9 in Anlage. Die entsprechende Antriebsbewegung der Flexwelle bewirkt eine weitere Bewegung der Antriebselemente 18 in den seitlichen Führungsschienen 4 nach unten, wodurch zwangsläufig die Führungselemente 9 in den Führungsschlitzen F nach unten mitgenommen werden. Dabei wirken auf den Deckel 8 linksseitig (entsprechend der Fig. 2 bis 5 und 7a, 7b) die Zugkräfte des Steuerstößels 12, der gemeinsam mit dem Führungselement 9 nach unten bewegt wird. Rechtsseitig wirken die Zugkräfte der Schraubenzugfeder 13, die mit dem gegenüberliegenden Führungselement 9 nach unten gezogen wird. Die Schwenkbewegung des Deckels 8 ist derart mit der Absenkbewegung des Auszugprofils 3 synchronisiert, dass der Deckel 8 erst dann geschlossen wird, wenn das Auszugprofil 3 den Durchtritt in den Schacht 5 nach unten passiert hat. Sobald der Deckel 8 seine Schließstellung erreicht hat, liegt er auf einem Rand des Durchtritts des Schachts 5 auf. Eine weitere Schwenkbewegung des Deckels 8 wird hierdurch blockiert. Die Führungselemente 9 haben jedoch noch nicht ihre untere Endstellung erreicht, sondern bewegen sich um einen geringen Gleitweg weiter nach unten. Dadurch werden die ein bis zwei Federwindungen 15 gespannt, so dass der Steuerstößel 12 zusätzlich zu seiner Funktion als Stößelstange noch eine elastische Spannkraft in Zugrichtung nach unten auf den Deckel 8 ausübt.

Bei einem umgekehrten Öffnungsvorgang aus der Ruhestellung des Auszugprofils 3 in der Reihenfolge der Fig. 6a bis 6d wird zunächst das Führungselement 9 durch geringfügige Nachobenbewegung des Auszugprofils 3 um einen geringen Weg nach oben verlagert, wodurch die ein bis zwei Federwindungen 15 entspannt werden und keine Spannkraft mehr ausüben. Anschließend wirkt der Steuerstößel 12 als einfache Stößelstange, indem er den Deckel 8 bei einer weiteren Nachobenbewegung der Führungselemente 9 gemeinsam mit den Antriebselementen 18 und dem Auszugprofil 3 allmählich öffnet. Anhand der Fig. 6d ist die geöffnete Endstellung, d.h. die Öffnungsstellung, des Deckels 8 erreicht, in der der Durchtritt so weit freigegeben ist, dass das Auszugprofil 3 frei nach oben verfahren kann. In dieser Öffnungsstellung verbleibt der Deckel 8 aufgrund der permanenten Zugkraftausübung der Zugfeder 10 auf das Führungselement 9, bis das Auszugprofil 3 gemeinsam mit dem Beschattungsgebilde 2 wieder in Richtung der Ruhestellung abgesenkt wird. Der dann einsetzende Schließvorgang des Deckels 8 wurde zuvor bereits beschrieben.

## Patentansprüche

1. Beschattungsvorrichtung (1) für eine Scheibe eines Kraftfahrzeugs mit einem Beschattungsgebilde (2), das mithilfe von Antriebsmitteln zwischen einer abgesenkten Ruhestellung und einer ausgefahrenen Beschattungsstellung in fahrzeugfesten seitlichen Führungsschienen (4) verlagerbar ist, wobei das Beschattungsgebilde (2) in der Ruhestellung durch einen Durchtritt hindurch in einen fahrzeugfesten Schacht (5) abgesenkt ist, wobei der Durchtritt durch einen zwischen einer öffnungs- und einer Schließstellung beweglichen Deckel (8) verschließbar ist, und wobei Steuermittel zum Öffnen und Schließen des Deckels vorgesehen sind, die an eine Verlagerungsbewegung des Beschattungsgebildes (2) gekoppelt sind, **dadurch gekennzeichnet, dass** die Steuermittel einen am Deckel (8) angreifenden Steuerstößel (12) umfassen, der in entgegengesetzten Zug- und Druckrichtungen an dem Deckel (8) angelenkt ist, um den Deckel (8) je nach Bewegungsrichtung des Steuerstößels (12) in seine Öffnungsstellung oder seine Schließstellung zu verschwenken, wobei der Steuerstößel (12) mit dem Deckel (8) über ein federelastisches Spannmittel (15) in Wirkverbindung ist, das in einer Bewegungsrichtung federelastisch gespannt und in einer entgegengesetzten Bewegungsrichtung wirkungslos entspannt ist, um in der einen Bewegungsrichtung des Steuerstößels (12) noch eine zusätzliche elastische Spannkraft auf den Deckel (8) auszuüben.

2. Beschattungsvorrichtung nach Anspruch 1, **dadurch gekennzeichnet, dass** der Steuerstößel und das Spannmittel durch eine Schraubenzugfeder gebildet sind, die wenigstens eine endseitige, in Zugrichtung als Spannmittel dienende Federwindung (15) aufweist, wobei alle Federwindungen der Schraubenzugfeder in Druckrichtung auf Block zusammengepresst sind.

3. Beschattungsvorrichtung nach Anspruch 2, **dadurch gekennzeichnet, dass** ein Federdraht der Schraubenzugfeder eine Federsteifigkeit aufweist, die ausreichend groß ist, um eine starre Stößelfunktion in Druckrichtung auf den Deckel (8) auszuüben.

4. Beschattungsvorrichtung nach Anspruch 2 oder 3, **dadurch gekennzeichnet, dass** die Schraubenzugfeder durch einen Stützkörper (14) außen- oder innenseitig flankiert ist, der die Federwindungen kraftschlüssig klemmt.

5. Beschattungsvorrichtung nach Anspruch 4, **dadurch gekennzeichnet, dass** der Stützkörper (14) als innenseitig vorgesehener zylindrischer Füllkörper gestaltet ist.

6. Beschattungsvorrichtung nach einem der vorhergehenden Ansprüche, **dadurch gekennzeichnet, dass** der Steuerstößel (12) an einer Seite des Deckels (8) angreift, und dass an einer gegenüberliegenden Seite des Deckels (8) ein elastisch spannbares Zugmittel (13) angreift, das nur in Zugrichtung auf den Deckel (8) wirkt.

7. Beschattungsvorrichtung nach einem der vorhergehenden Ansprüche, **dadurch gekennzeichnet, dass** der Steuerstößel (12) gegenüberliegend zu dem Angriffspunkt (16) an dem Deckel (8) an einem längs einer seitlichen Führungsschiene (4) verfahrbaren Führungselement (9) angelenkt ist, das über einen begrenzten Verfahrweg mit dem Beschattungsgebilde (2) in Wirkverbindung ist.

8. Beschattungsvorrichtung nach Anspruch 7, **dadurch gekennzeichnet, dass** das Führungselement (9) in einen Bewegungsweg eines Antriebselements (18) eines formstabilen Auszugprofils (3) des Beschattungsgebildes (2) hineinragt.

## Claims

1. Shading device (1) for a window of an automotive vehicle, comprising a shading structure (2) which is displaceable in vehicle-fixed lateral guiding rails (4) between a lowered rest position and a deployed shading position using drive means, wherein the shading structure (2) in the rest position is lowered down in a vehicle-fixed chamber (5) through a passage, wherein the passage is closable by a cover (8) which is movable between an open position and a closed position, and wherein control means for opening and closing the cover are provided and coupled to a displacement move of the shading structure (2), **characterized in that**
the control means comprise a control plunger (12) engaging on the cover (8), which plunger is articulated to the cover (8) in opposed pull and push directions, in order to pivot the cover (8) to its open position or its closed position depending on the movement direction of the control plunger (12), wherein the control plunger (12) is in operative connection with the cover (8) via a spring-elastic tensioning means (15) which is spring-elastically tensioned in one movement direction and inactively relaxed in an opposite movement direction, in order to exert an additional elastic tensional force on the cover (8) in the one movement direction of the control plunger (12).

2. Shading device according to claim 1, **characterized in that** the control plunger and the tensioning means are formed by a spiral tension spring which includes at least one terminal spring winding (15) acting as a tensioning means in the pull direction, wherein all spring windings of the spiral tension spring are compressed to block in the push direction.

3. Shading device according to claim 2, **characterized in that** a spring wire of the spiral tension spring exhibits a spring rigidity great enough in order to exert a rigid plunger function on the cover (8) in the push direction.

4. Shading device according to claim 2 or 3, **characterized in that** the spiral tension spring is flanked on the exterior side or interior side by a supporting body (14) to clamp the spring windings in a force-fitting manner.

5. Shading device according to claim 4, **characterized in that** the supporting body (14) is in the form of a cylindrical packing provided on the interior side.

6. Shading device according to any of the preceding claims, **characterized in that** the control plunger (12) engages on one side of the cover (8), and **in that** an elastically tension-able pulling means (13) engages on an opposite side of the cover (8), said pulling means acting on the cover (8) only in the pull direction.

7. Shading device according to any of the preceding claims, **characterized in that** the control plunger (12) is articulated on a guiding element (9) movable along a lateral guiding rail (4) opposite to the point of application (16) on the cover (8), which guiding element is in operative connection with the shading structure (2) over a limited traveling distance.

8. Shading device according to claim 7, **characterized in that** the guiding element (9) protrudes into a trajectory of a drive element (18) of a dimensionally stable pull-out profile (3) of the shading structure (2).

## Revendications

1. Dispositif d'ombrage (1) pour une vitre d'un véhicule automobile comprenant une structure d'ombrage (2) déplaçable dans des rails de guidage (4) latéraux fixés au véhicule entre une position de repos abaissée et une position d'ombrage déployée par le biais de moyens d'entraînement, dans lequel la structure d'ombrage (2) dans la position de repos est abaissée dans une cage (5) fixée au véhicule à travers un passage, dans lequel le passage peut être fermé par un couvercle (8) mobile entre une position ouverte et une position fermée, et dans lequel des moyens de commande sont prévus pour ouvrir et fermer le couvercle, lesdits moyens couplés à un mouvement de déplacement de la structure d'ombrage (2),
**caractérisé en ce que**
les moyens de commande présentent un piston de commande (12) engrenant au couvercle (8), ledit piston étant articulé au couvercle (8) dans des directions de traction et de poussée opposées, afin de pivoter le couvercle (8) selon la direction de mouvement du piston de commande (12) vers sa position ouverte ou sa position fermée, dans lequel le piston de commande (12) est en liaison active avec le couvercle (8) par un moyen de tension (15) à élasticité de ressort, ledit moyen de tension étant tendu avec élasticité de ressort dans une direction de mouvement et détendu inopérant dans une direction de mouvement opposée, afin d'exercer encore une force de tension élastique supplémentaire au couvercle (8) dans l'une direction de mouvement du piston de commande (12).

2. Dispositif d'ombrage selon la revendication 1, **caractérisé en ce que** le piston de commande et le moyen de tension sont formés par un ressort hélicoïdal de tension qui présente au moins une spire de ressort (15) terminal servant de moyen de tension dans la direction de traction, dans lequel toutes les spires de ressort du ressort hélicoïdal de tension sont compressées sur le bloc dans la direction de poussée.

3. Dispositif d'ombrage selon la revendication 2, **caractérisé en ce qu'**un fil à ressort du ressort hélicoïdal de tension présente une raideur de ressort suffisamment grande pour exercer une fonction de piston rigide au couvercle (8) dans la direction de poussée.

4. Dispositif d'ombrage selon la revendication 2 ou 3, **caractérisé en ce que** le ressort hélicoïdal de tension est encadré au côté extérieur ou au côté intérieur par un corps de support (14), ledit corps serrant les spires de ressort par liaison de force.

5. Dispositif d'ombrage selon la revendication 4, **caractérisé en ce que** le corps de support (14) est configuré sous forme de corps de remplissage cylindrique prévu au côté intérieur.

6. Dispositif d'ombrage selon l'une quelconque des revendications précédentes, **caractérisé en ce que** le piston de commande (12) engrène sur un côté du couvercle (8), et **en ce que** sur un côté opposé du couvercle (8) engrène un moyen de traction (13) qui peut être tensionné élastiquement et agit sur le couvercle (8) seulement dans la direction de traction.

7. Dispositif d'ombrage selon l'une quelconque des revendications précédentes, **caractérisé en ce que** le piston de commande (12) est articulé au couvercle (8) opposé au point d'engrenage (16) à un élément de guidage (9) déplaçable le long d'un rail de guidage (4) latéral, ledit élément de guidage étant en liaison active avec la structure d'ombrage (2) selon un trajet de déplacement limité.

8. Dispositif d'ombrage selon la revendication 7, **caractérisé en ce que** l'élément de guidage (9) fait saillie dans un trajet de mouvement d'un élément d'entraînement (18) d'un profilé de tirage (3) dimensionnellement stable de la structure d'ombrage (2).
